# EUROPEAN PATENT SPECIFICATION

(11) **EP 4 391 874 B1**
(45) Date of publication and mention of the grant of the patent: **04.12.2024**
(21) Application number: 22793233.2
(22) Date of filing: 06.10.2022
(51) Int. Cl.: A47J 31/36, A47J 31/44

(54) **APPARATUS FOR MAKING A BEVERAGE BY INFUSION OF A FOOD SUBSTANCE**
VORRICHTUNG ZUR HERSTELLUNG EINES GETRÄNKS DURCH AUFGIESSEN EINER LEBENSMITTELSUBSTANZ
APPAREIL POUR LA FABRICATION DE BOISSON PAR INFUSION DE SUBSTANCE ALIMENTAIRE

(30) Priority: 08.10.2021 IT 202100025913
(43) Date of publication of application: 03.07.2024
(73) Proprietor: Caffitaly System S.P.A., 40041 Gaggio Montano (BO) (IT)
(72) Inventor: PAOLETTI, Luciano, 50100 Firenze (IT); DIAMANTI, Maurizio, 40030 Castel di Casio (BO) (IT); CASTELLI, Cristiano, 40046 Alto Reno Terme (BO) (IT); TONELLI, Stefano, 40041 Gaggio Montano (BO) (IT)
(74) Representative: Ponchiroli, Simone
(86) International application number: PCT/IB2022/059536
(87) International publication number: WO 2023/057939

(56) References cited:
- EP-A1- 3 028 608
- EP-A1- 3 838 080
- WO-A1-2014/056641
- WO-A1-2017/134544

## Description

This invention relates in general to the sector of beverage making apparatuses. In particular, this invention relates to an apparatus for making a beverage by infusion of a food substance, for example roasted and ground coffee or a soluble substance, which is contained in a capsule.

Apparatuses of the type for which this invention is intended comprise an infusion unit which in turn comprises a first member and a second member: the first member is movable relative to the second member between a home position, in which the first member and the second member are spaced apart from each other and the infusion chamber is open and allows insertion of the capsule, and an operating position, in which the first member and the second member are coupled to each other and the infusion chamber is closed and ready for infusion of the food substance contained in the capsule housed in the infusion chamber itself.

The prior art comprises many variants of apparatuses of this type.

In some prior-art apparatuses the capsule is loaded by the user directly into the open infusion chamber: the casing of the apparatus has an opening which is at the passage created between the first member and the second member which are spaced apart in the home position. The capsule is inserted into the infusion chamber through the opening.

In other prior-art apparatuses (such as those described in EP 3 028 608 A1 and in WO 2017/134544 A1, which disclose the features of the preamble of independent claim 1) the user does not load the capsule directly into the infusion chamber, but instead inserts it into a positioner which is mounted fixed above the passage between the first member and the second member in the home position. In some of these apparatuses the capsule is inserted into the positioner when the infusion chamber is closed and remains waiting in the positioner until the infusion chamber is opened, thereby freeing it to fall into the infusion chamber. In others of these apparatuses the capsule is retained in the positioner by a movable element which is interposed between the positioner and the infusion chamber; as a result of a respective command, the control unit of the apparatus causes the movable element to be shifted, thereby freeing the passage for the capsule to fall into the open infusion chamber. Indirect loading of the capsule, that is to say, the positioner, is usually used in apparatuses in which the capsule must be read or recognised before its use, or in apparatuses which allow the user to insert multiple capsules to be automatically supplied one after another; in fact, in the latter case, a second capsule may be inserted into the positioner while a first capsule is already in the infusion chamber. These are generally automated apparatuses in which opening and closing of the infusion chamber is driven by a motor, not by a lever manually moved by the user.

The prior-art apparatuses have several disadvantages or in any case some aspects of them can be improved.

Regarding apparatuses in which the capsule is loaded directly into the open infusion chamber, the easy access to the infusion chamber constitutes a risk of an incautious user or a child being able to have their fingers crushed during closing of the infusion chamber, as well as a risk of the incautious user, during loading of the capsule, being able to burn him/herself due to steam or hot beverage residues from the previous beverage making.

Regarding apparatuses with indirect loading, the fact that they are usually automated means that, there being no manual lever, the user cannot know the state of the apparatus at the time of inserting the capsule, that is to say, whether the infusion chamber is open or closed. In general, in these apparatuses, capsule loading from the positioner to the infusion chamber occurs suddenly (as soon as the infusion chamber opens or as soon as the movable element is shifted) and the user, taken by surprise, may have the impression that he/she is not in control of "his/her" apparatus.

Moreover, the need for the positioner to be at the passage between the first member and the second member in the home position sets a structural constraint which limits the freedom of the designer when designing the apparatus. For example, due to the dimensions of the members of the infusion chamber, the positioner at the top of the apparatus cannot be in the part of the apparatus closest to the user and in contrast must be approximately half way along the depth of the apparatus.

In this context the technical purpose which forms the basis of this invention is to provide an apparatus for making a beverage which is advantageous compared with prior-art apparatuses, or which at least offers an alternative solution to the prior-art ones.

The technical purpose specified and the aims indicated are substantially achieved by an apparatus for making a beverage as described in independent claim 1. Special embodiments of this invention are defined in the corresponding dependent claims. According to one aspect of this invention, the apparatus comprises a movable loader for loading the capsule into the infusion chamber. The user inserts the capsule into the loader when the infusion chamber is closed and, during opening of the infusion chamber, the loader brings the capsule into the loading position where it can fall into the open infusion chamber. The capsule is not loaded by the user directly into the open infusion chamber, but instead is loaded by means of the loader (or positioner).

For that purpose the loader is movable between a first position and a second position in a way coordinated with the movement of the first member of the infusion unit between the home position and the operating position.

The first position, which corresponds to the home position in which the infusion chamber is open, is the loading position in which the capsule comes out of the loader and is loaded into the infusion chamber.

The second position, which corresponds to the operating position in which the infusion chamber is closed, is a receiving position in which the capsule inserted and received in the loader remains in the loader itself.

Therefore, the user does not have access to the infusion chamber (which is closed) when he/she inserts the capsule into the loader. That greatly reduces the risk of an accident during use of the apparatus.

In the second position the capsule remains waiting and if necessary can be removed or replaced, if the user realises that he/she has inserted an incorrect capsule or changes his/her mind about the beverage wanted.

It should be noticed that the different positions of the loader immediately make clear the state of the apparatus: seeing the loader in the second position, the user is aware that the infusion chamber is closed and that he/she can position the capsule. If the loader is not in the second position, the user knows that the infusion chamber is open and that the apparatus is not ready to receive the new capsule.

Moreover, the visible shifting of the capsule from insertion into the loader to loading into the infusion chamber allows the user to clearly perceive what is happening and that his/her beverage will soon be ready.

Finally, the mobility of the loader allows the designer to design an apparatus which is easier for the user to use. For example, in the embodiments illustrated in the figures the position for insertion of the capsule into the loader (that is to say, the receiving position) is very close to the user and actually is substantially above the beverage dispenser.

In one particular embodiment, the movement of the loader from the first position to the second position, and vice versa, is a translating movement. That is easy to implement, in particular if the first member also translates from the operating position to the home position.

In one particular embodiment, the loader is coupled to the first member and is movable together with the first member. This embodiment is particularly simple, since it does not require separate moving mechanisms for the first member and for the loader.

In one particular embodiment, in the second position the loader is above the second member of the infusion unit, which for example is fixed and stationary relative to a supporting frame of the apparatus. Basically, the second member prevents the capsule from falling from the loader in the receiving position. This embodiment is simple because it does not require special retaining elements for the capsule in the loader.

In one particular embodiment of this invention, the apparatus comprises a capsule recognition device, which is coupled to the loader and is configured to perform a recognition of the capsule in the loader. The time taken by the loader to go from the receiving position to the loading position may be usefully used by the recognition device for reading and processing the information on the capsule. That is useful in particular for complex processing (such as recognition of images on the capsule) which may require more time, since thanks to the movement of the loader the user does not perceive the processing time as dead time.

Further features and the advantages of this invention will be more apparent from the detailed description of several preferred, non-limiting embodiments of an apparatus for making a beverage, illustrated in the accompanying drawings in which:
- Figure 1 is an axonometric view of a first embodiment of an apparatus for making a beverage according to this invention, in a closed position;
- Figure 2 is a top view of the apparatus of Figure 1;
- Figure 3 is a front view, in vertical cross-section, of the apparatus of Figure 1, sectioned along the section line III-III in Figure 2;
- Figure 4 is a side view, in vertical cross-section, of the apparatus of Figure 1, sectioned along the section line IV-IV in Figure 3;
- Figure 5 is a side view, in vertical cross-section, of the apparatus of Figure 1, sectioned along the section line V-V in Figure 2, in the closed position and with a capsule in a loader;
- Figure 6 is a side view, in vertical cross-section, of the apparatus of Figure 1, sectioned along the section line V-V in Figure 2, in an intermediate position and with the capsule in the loader;
- Figure 7 is a side view, in vertical cross-section, of the apparatus of Figure 1, sectioned along the section line V-V in Figure 2, in an open position and with the capsule loaded in the infusion chamber;
- Figure 8 is a side view, in vertical cross-section, of the apparatus of Figure 1, sectioned along the section line V-V in Figure 2, in the closed position and with the capsule in the infusion chamber;
- Figure 9 is an enlarged view of a detail IX of Figure 5;
- Figure 10 is an axonometric view of a second embodiment of an apparatus for making a beverage according to this invention, in a closed position;
- Figure 11 is a top view of the apparatus of Figure 10;
- Figure 12 is a side view, in vertical cross-section, of the apparatus of Figure 10, sectioned along the section line XII-XII in Figure 11, in the closed position and with a capsule in a loader;
- Figure 13 is a side view, in vertical cross-section, of the apparatus of Figure 10, sectioned along the section line XII-XII in Figure 11, in an intermediate position and with the capsule in the loader;
- Figure 14 is a side view, in vertical cross-section, of the apparatus of Figure 10, sectioned along the section line XII-XII in Figure 11, in an open position and with the capsule loaded in the infusion chamber;
- Figure 15 is a side view, in vertical cross-section, of the apparatus of Figure 10, sectioned along the section line XII-XII in Figure 11, in the closed position and with the capsule in the infusion chamber;
- Figure 16 is a front view of a third embodiment of an apparatus for making a beverage according to this invention;
- Figure 17 is an axonometric view of the apparatus of Figure 16, in a closed position;
- Figure 18 is a side view, in vertical cross-section, of the apparatus of Figure 16, sectioned along the section line XVIII-XVIII, in the closed position and with two capsules waiting to be loaded;
- Figure 19 is an axonometric view of the apparatus of Figure 16, in an intermediate position;
- Figure 20 is a side view, in vertical cross-section, of the apparatus of Figure 16, sectioned along the section line XVIII-XVIII, in the intermediate position and with the two capsules waiting;
- Figure 21 is an axonometric view of the apparatus of Figure 16, in an open position;
- Figure 22 is a side view, in vertical cross-section, of the apparatus of Figure 16, sectioned along the section line XVIII-XVIII, in the open position and with one capsule loaded into the infusion chamber, whilst the other capsule is waiting;
- Figures 23, 24 and 25 are enlarged views of a detail of a side view of the apparatus of Figure 16, respectively in the closed position, in the intermediate position and in the open position.

In the accompanying figures, the reference number 1 denotes in its entirety an apparatus for making a beverage according to this invention. The apparatus 1 allows the beverage to be obtained by infusion of a food substance, which may be for example roasted and ground coffee powder or a soluble substance, which is contained in a capsule 9. In particular, the capsule 9 is a disposable capsule. It should be noticed that the term "capsule" also means a pod, a cartridge or a similar object in which a casing contains the food substance.

It should be noticed that what is shown in the figures does not correspond to a complete apparatus, but only to what is necessary to illustrate this invention. In fact the figures do not show an outer casing of the apparatus (which is in contrast present in the apparatuses to be made available for sale) and some other components have been removed to put a greater focus on what is of interest for this invention.

It should also be emphasised that the figures and the following description refer to apparatuses commonly indicated as being of the "horizontal unit" type, that is to say, in which the movement of a first member of an infusion unit takes place along an axis which is substantially horizontal (or if necessary slightly oblique relative to the horizontal line) and in which loading of the capsule into an open infusion chamber occurs from above thanks to gravity. This invention is applicable in particular to apparatuses of this type. First, the apparatus 1 comprises a supporting frame 11, configured to support the internal components of the apparatus 1. It is possible to removably fix to the supporting frame 11 an outer casing which contains and protects the internal components of the apparatus 1.

The apparatus 1 also comprises an infusion unit 2, which defines an infusion chamber 20 intended to receive the capsule 9.

In turn, the infusion unit 2 comprises a first member 21 and a second member 22; the first member 21 is movable relative to the second member 22 between a home position and an operating position.

In the embodiments illustrated in the figures, the first member 21 is movable relative both to the supporting frame 11 and to the second member 22, whilst the second member 22 is fixed and stationary relative to the supporting frame 11; in other possible embodiments, the first member 21 and the second member 22 are both movable relative to the supporting frame 11.

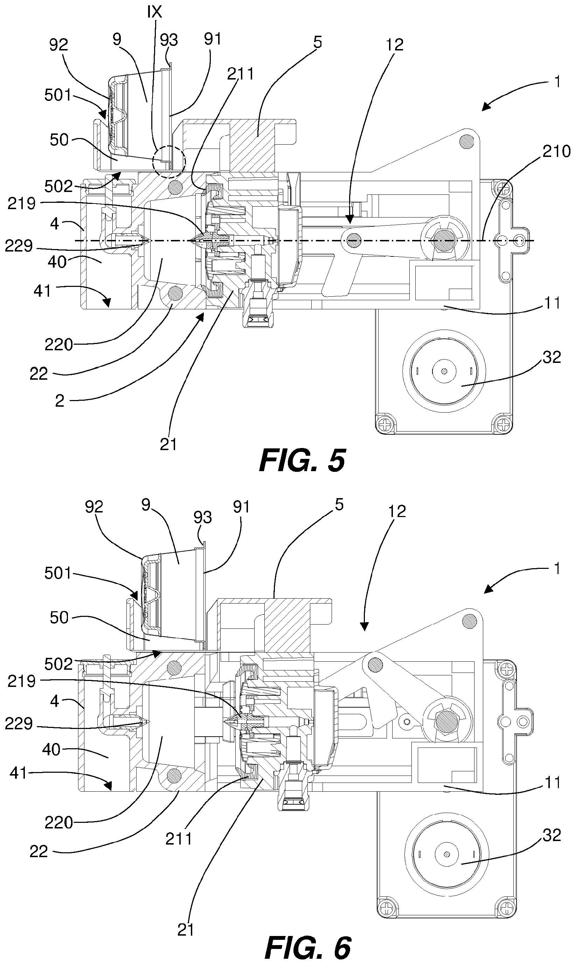

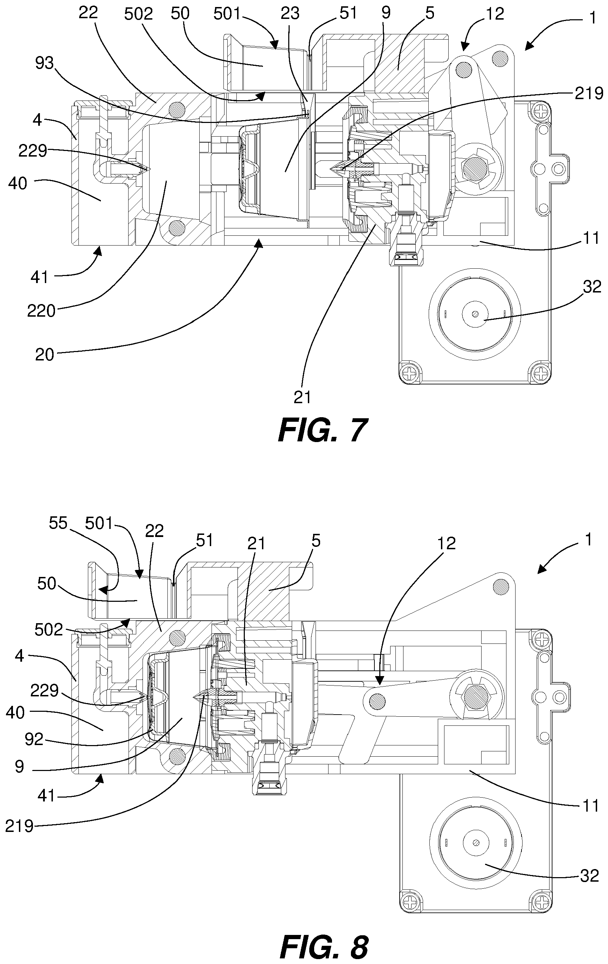

In any case, when the first member 21 is in the home position (Figure 7 for the first embodiment) the first member 21 and the second member 22 are spaced apart from each other and the infusion chamber 20 is open and allows loading of the capsule 9 into the infusion chamber 20 or removal of the capsule 9 from the infusion chamber 20. When the first member 21 is in the operating position (Figures 5 and 8 for the first embodiment) the first member 21 and the second member 22 are coupled to each other and the infusion chamber 20 is closed.

Basically, when the first member 21 is in the home position, the infusion chamber 20 is open and beverage making has not yet started (in this case the capsule 9 must be loaded / has just been loaded into the infusion chamber 20) or has ended (in this case the already used capsule 9 must be removed from the infusion chamber 20); when the first member 21 is in the operating position and the capsule 9 is inside the infusion chamber 20, the infusion chamber 20 is closed and the apparatus 1 can make the beverage. One of the intermediate positions between the home position and the operating position is shown in Figure 6 (for the first embodiment).

Specifically, the first member 21 is slidably mounted relative to the supporting frame 11 along a line of movement 210 between the home position and the operating position. In an apparatus 1 of the horizontal unit type, the line of movement 210 is substantially horizontal.

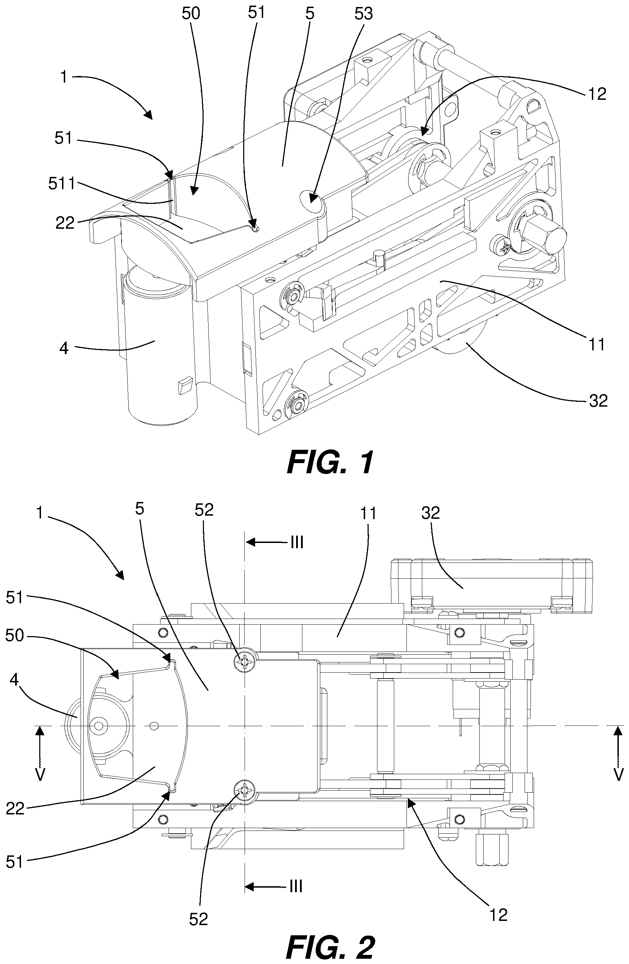

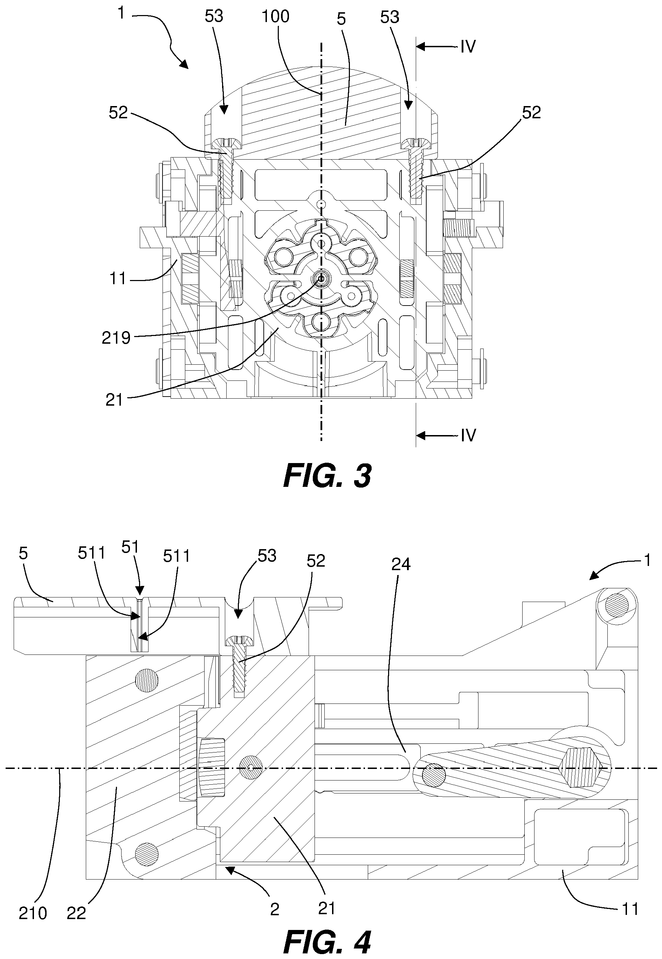

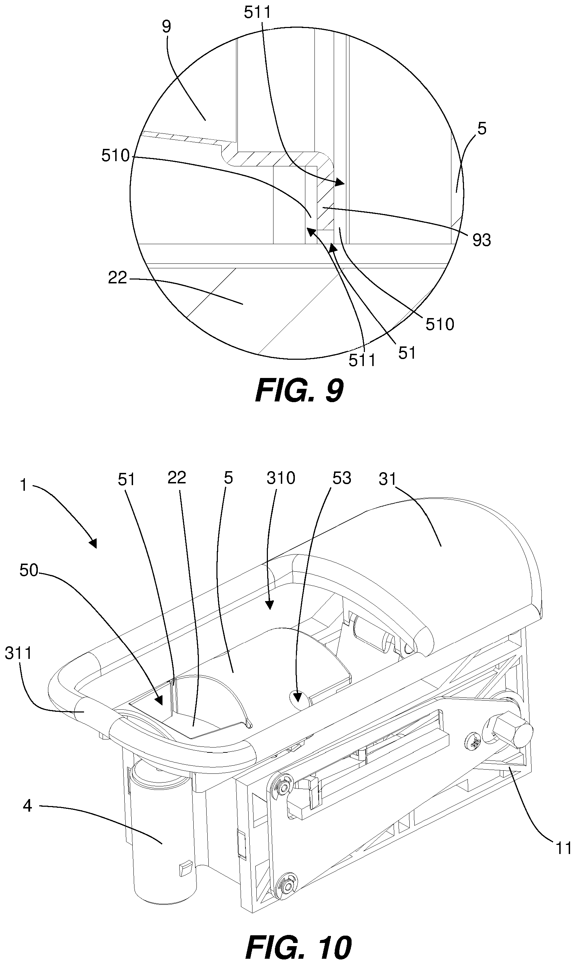

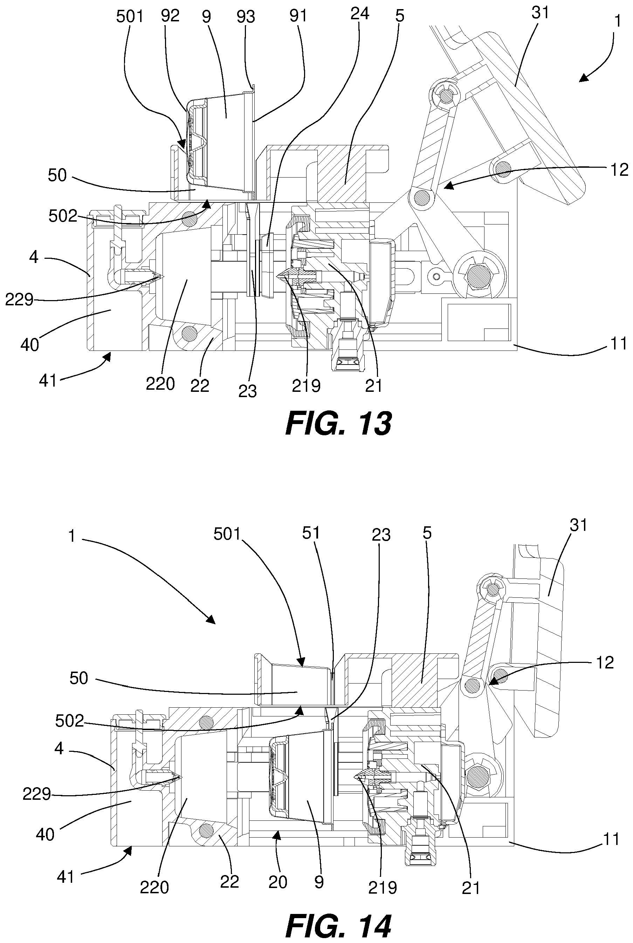

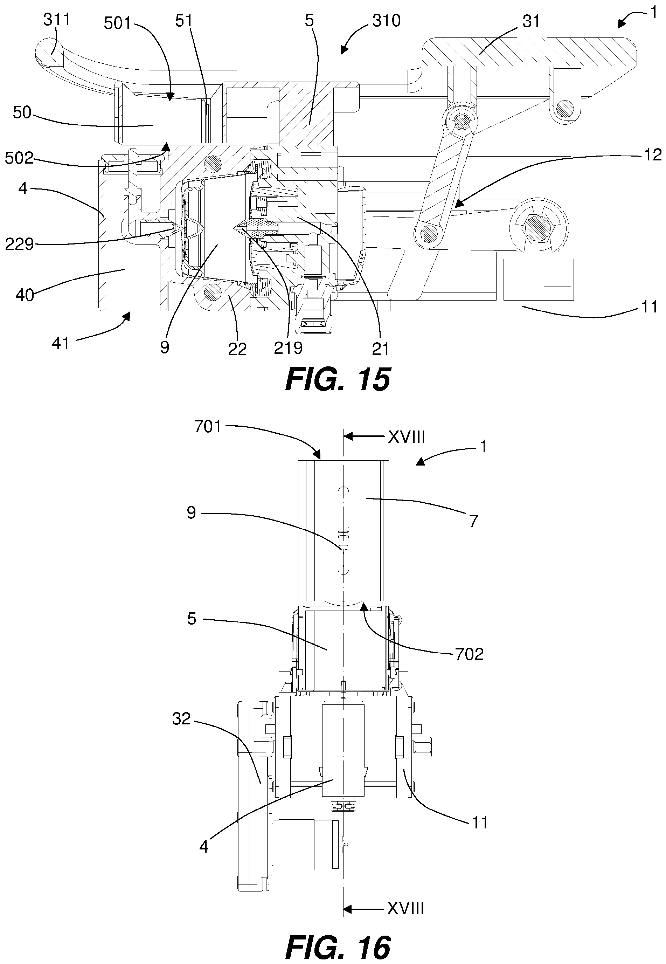

Regarding the movement of the first member 21, it is motor-driven (as for the first embodiment - Figures 1 to 9 - and for the third embodiment - Figures 16 to 25) and if necessary automated, or it is manually driven by a user by means of a lever 31 or a handle (second embodiment - Figures 10 to 15). In particular, in the embodiments in which the movement of the first member 21 is motor-driven, the apparatus 1 comprises a motor 32 which is connected to the first member 21 by means of an articulated mechanism 12. In the embodiments in which the movement of the first member 21 is manually driven, the lever 31 is connected to the first member 21 by means of the articulated mechanism 12. In both cases the features linked to the articulated mechanism 12 are in themselves known to a person skilled in the art and will not be described in detail below. It should also be emphasised that the presence of the articulated mechanism 12 must not be considered limiting for this invention: both the motor 32 and the lever 31 may be connected to the first member 21 in a way different from what is described above.

In the embodiments illustrated, in the second member 22 a housing 220 is made for housing the capsule 9 loaded in the infusion chamber 20, whilst the first member 21 is a gasket-holder body on which a sealing gasket 211 is mounted for closing the infusion chamber 20 in a watertight manner. When the first member 21 is in the operating position, the first member 21 and the second member 22 are coupled to each other in such a way that the first member 21 closes the housing 220 made in the second member 22, that is to say, the infusion chamber 20 is closed.

The infusion unit 2 also comprises other components which, already being known in themselves, will not be described in further detail (instead only referred to as required), such as: retaining elements 23, for receiving a flange 93 of the capsule 9 loaded into the open infusion chamber 20 and for retaining the capsule 9 during closing of the infusion chamber 20; ejectors 24 for pushing the capsule 9 out of the housing 220 during opening of the infusion chamber 20; piercing means which are configured to create openings in the capsule 9 to allow the injection of a liquid substance (for example, pressurised hot water) into the capsule 9 and to allow the beverage to come out of the capsule 9. In particular, the piercing means comprise a first piercer 219, associated with the first member 21 of the infusion unit 2, which is configured to pierce a top wall 91 of the capsule 9 creating a first opening for injection of the liquid substance into the capsule 9 by beverage making parts, a second piercer 229, associated with the second member 22, which is configured to pierce a bottom wall 92 of the capsule 9 creating a second opening from which the beverage to be dispensed comes out.

The apparatus 1 also comprises beverage making parts, which are configured to feed, in use, the liquid substance into the infusion chamber 20 through the food substance contained in the capsule 9, in such a way as to cause the beverage to be made as a result of the interaction between the liquid substance and the food substance.

Specifically, the beverage making parts comprise for example: a tank for the liquid substance; a pump; a heater; feeding pipes for feeding the liquid substance to the infusion chamber 20 and to the capsule 9 through the first opening.

The apparatus 1 also comprises a dispenser 4 to dispense the beverage made. In the embodiments illustrated, the dispenser 4 substantially is a tubular body which has an inner chamber 40 with a dispensing opening 41, from which the beverage comes out, in a bottom region of the inner chamber 40. The dispenser 4 is hydraulically connected to the infusion chamber 20 by means of a duct, therefore it receives the beverage which comes out of the capsule 9 through the second opening.

The apparatus 1 according to this invention also comprises a loader 5 for loading the capsule 9 into the infusion chamber 20. The loader 5 has an insertion opening 501 for inserting the capsule 9 into the loader 5, a receiving seat 50 for receiving the inserted capsule 9, an outfeed opening 502 through which the capsule 9 can come out of the receiving seat 50 and go towards the infusion chamber 20.

Specifically, it being an apparatus 1 of the horizontal unit type, the insertion opening 501 is at the top of the receiving seat 50, whilst the outfeed opening 502 is on the bottom of the receiving seat 50. Insertion of the capsule 9 into the receiving seat 50 occurs from the top and loading of the capsule 9 into the infusion chamber 20 occurs by falling thanks to gravity.

In the embodiments illustrated, the receiving seat 50 is at least partly shaped like the capsule 9 to be received, that is to say, the shape of the receiving seat 50 roughly traces part of the shape of the capsule 9. In particular, the receiving seat 50 comprises a pair of grooves 51, symmetrical relative to a longitudinal plane 100 of the apparatus 1, which extend for the entire height of the receiving seat 50, from the insertion opening 501 to the outfeed opening 502. The grooves 51 are configured to receive the flange 93 of the capsule 9, in such a way as to guide both insertion of the capsule 9 into the receiving seat 50 and the capsule 9 coming out of the receiving seat 50. Moreover, the grooves 51 allow the capsule 9 to be kept in a correct position for subsequent loading into the infusion chamber 20, that is to say, with its top wall 91 substantially vertical (perpendicular to the longitudinal plane 100 of the apparatus 1). That is achieved with a clearance 510, which is small, between inner walls 511 of the grooves 51 and the flange 93 of the capsule 9 inserted, as shown in detail in Figure 9.

In the first two embodiments shown in Figures 1 to 15, the capsule 9 inserted into the receiving seat 50 projects from the loader 5 through the insertion opening 501. In the case of insertion of an incorrect capsule 9 into the receiving seat 50, for the user it is easy to remove it and to replace it with the desired capsule 9. In the third embodiment shown in Figures 16 to 25, in contrast, the capsule 9 is completely contained inside the receiving seat 50, so that the capsule 9 does not project from the loader 5.

In accordance with this invention, the loader 5 is movable relative to the supporting frame 11 between a first position (shown in Figure 7 for the first embodiment) and a second position (shown in Figure 5 for the first embodiment). The movement of the loader 5 from the first position to the second position, and vice versa, is coordinated with the movement of the first member 21 from the home position to the operating position, and vice versa, that is to say, is coordinated with the closing/opening of the infusion chamber 20. When the first member 21 is in the home position the loader 5 is in the first position, when the first member 21 is in the operating position the loader 5 is in the second position.

The first position is a loading position, in which the receiving seat 50 is in communication with the open infusion chamber 20 through the outfeed opening 502, so that in use the capsule 9 in the receiving seat 50 comes out of the receiving seat 50 through the outfeed opening 502 and is loaded into the infusion chamber 20. Specifically, when the loader 5 is in the loading position the receiving seat 50, the outfeed opening 502 and the open infusion chamber 20 are positioned one above the other, so that the capsule 9 is loaded into the infusion chamber 20 by falling from the receiving seat 50 due to gravity. In Figure 7 the capsule 9 has already been allowed to fall into the open infusion chamber 20.

In contrast, the second position is a receiving position, in which the outfeed opening 502 is blocked, so that in use the capsule 9, which is inserted in the loader 5 and is received in the receiving seat 50, cannot come out through the outfeed opening 502 and remains in the receiving seat 50.

In other words: the capsule 9 is inserted into the loader 5 when the latter is in the receiving position (second position); the capsule 9 is loaded into the infusion chamber 20 when the loader 5 is in the loading position (first position). In the movement from the second position to the first position, the loader 5 brings with it the capsule 9 which it received when it was in the second position, goes through intermediate positions (one of which is shown in Figure 6) and, when the first position is reached, the capsule 9 is unloaded from the loader 5 and is loaded into the infusion chamber 20.

In the particular embodiments shown in the figures, when the loader 5 is in the receiving position (second position) the receiving seat 50 is above the second member 22 of the infusion unit 2. The outfeed opening 502 is blocked by the second member 22 (that is to say, by an outer face of the second member 22) and therefore it is really the second member 22 which prevents the capsule 9 from coming out of the receiving seat 50. The loader 5 is movable relative to the second member 22 and therefore the obstruction is no longer present in the loading position (first position). It is a technical solution useful thanks to its simplicity, in particular if the second member 22 is fixed and stationary relative to the supporting frame 11, as shown in the figures.

In other embodiments, the outfeed opening 502 is blocked by the dispenser 4 or by a fixed element which is part of the supporting frame 11.

It should be noticed that the expression "the outfeed opening is blocked" does not necessarily mean that the entire outfeed opening is blocked or that there is a blocking element physically positioned in the outfeed opening. This expression should be understood in the meaning that the passage of the capsule 9 through the outfeed opening 502 and the consequent unloading of the capsule 9 from the loader 5 are prevented by the blocking element (which in particular in the embodiments illustrated is constituted of a top face of the second member 22). The blocking could even only be at the lower edge of the flange 93 of the capsule 9 in the receiving seat 50.

In particular, when the loader 5 is in the loading position the grooves 51 of the loader 5 and the retaining elements 23 of the infusion unit 2 are aligned with each other and define two guides on opposite sides of the flange 93 of the capsule 9, so that loading of the capsule 9 into the infusion chamber 20 is a fall, due to gravity, which is guided by said two guides.

Regarding the movement of the loader 5, in the embodiments illustrated its movement from the loading position (first position) to the receiving position (second position), and vice versa, is a translating movement. In particular, the translating movement of the loader 5 is parallel to the line of movement 210 of the first member 21, that is to say, the loader 5 translates parallel to the translation of the first member 21. Even more specifically, the line of movement 210 of the first member 21 and the translating movement of the loader 5 are substantially horizontal.

In the embodiments illustrated, the loader 5 mechanically operates in conjunction with the infusion unit 2, that is to say, the loader 5 and the infusion unit 2 physically interact with each other during the movement. In particular, the movement of the first member 21 from the operating position to the home position, and vice versa, causes the movement of the loader 5 from the receiving position to the loading position, and vice versa.

In the embodiments illustrated, the loader 5 is coupled to the first member 21 and is movable relative to the supporting frame 11 together with the first member 21 of the infusion unit 2. For example the loader 5 is fixed to the first member 21 by screws 52 inserted in respective through holes 53 made in the loader 5. However other embodiments are possible in which the loader 5 is fixed to the first member 21 in different ways (for example, glued) or is made in one piece with the first member 21.

Therefore, in accordance with what was previously described, in the embodiments illustrated the second member 22 is fixed and stationary relative to the supporting frame 11 and the loader 5 is slidably mounted relative to the second member 22 (and relative to the supporting frame 11) between the receiving position and the loading position, and vice versa, according to the translating movement which, for example, is a horizontal translation.

In the embodiments illustrated, the second member 22 of the infusion unit 2 is near the dispenser 4, to which it is connected by a short duct. In other words, the second member 22 is in a front part of the apparatus 1 (where the dispenser 4 below which the user puts a cup is located) and is interposed between the first member 21 and the dispenser 4. The loader 5 in the receiving position is shifted towards the front part of the apparatus 1: the receiving seat 50 is located above the dispenser 4 and the second member 22, therefore it is near the user. In the movement towards the loading position the loader 5 shifts towards the rear part of the apparatus 1: the user sees the capsule 9 inserted into the loader 5 move away.

It should be noticed that the outer casing (not shown) of the apparatus 1 may be shaped in such a way as to cover the receiving seat 50 when the loader 5 is in the loading position. For example, the outer casing forms a sort of tunnel in which the loader 5 is located in the loading position and from which the loader 5 projects in the receiving position. That is useful both for preventing the user or a child from being able to access the open infusion chamber 20, and for forcing the user to insert the capsule 9 only when the loader 5 is in the receiving position.

An example of an operating cycle of the apparatus 1 is as follows:
- the first member 21 is in the operating position (with the infusion chamber 20 closed) and the loader 5 is in the receiving position; the user inserts a capsule 9 into the receiving seat 50, where it remains because the outfeed opening 502 is blocked (Figure 5), and issues a beverage making start command to the apparatus 1;
- the motor 32 drives the articulated mechanism 12, which moves the first member 21 from the operating position towards the home position along the horizontal line of movement 210; the loader 5, fixed to the first member 21, is moved from the receiving position towards the loading position (Figure 6); the capsule 9 remains inside the receiving seat 50;
- the first member 21 and the loader 5 respectively reach the home position (with the infusion chamber 20 open) and the loading position; the outfeed opening 502 is no longer blocked and the capsule 9, thanks to gravity, falls from the receiving seat 50 into the infusion chamber 20 below, thereby being loaded into the infusion chamber 20 (Figure 7);
- the first member 21 is moved from the home position towards the operating position, closing the infusion chamber 20 and returning the loader 5 towards the receiving position;
- the infusion chamber 20 is closed with the capsule 9 inside it; beverage making and its dispensing by the dispenser 4 can start (Figure 8); if necessary, another capsule 9 can be inserted into the loader 5.

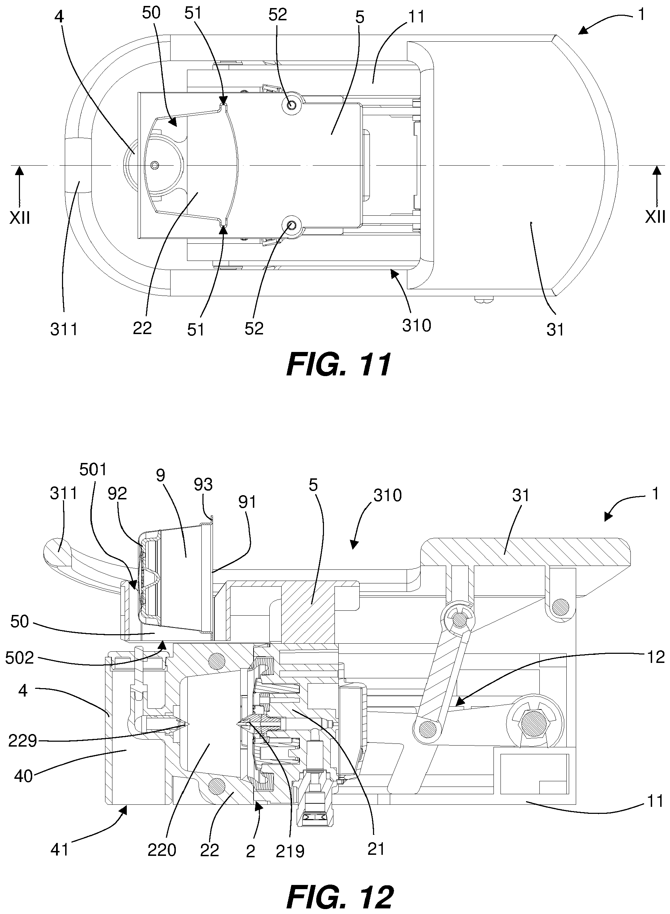

Figures 10 to 15 show a second embodiment of the apparatus 1 according to this invention. It differs from the first embodiment of Figures 1 to 9 as regards the movement of the first member 21. In fact, in the second embodiment, the movement of the first member 21 is manually driven by a user by means of a lever 31. In particular, the lever 31 has a grip zone 311, positioned on the opposite side to where it pivots at the supporting frame 11. Moreover, the lever 31 has a through opening 310 which makes gripping of the lever 31 at the grip zone 311 by the user easier and allows insertion of the capsule 9 into the receiving seat 50 of the loader 5, as can be seen in Figures 10 and 12.

Moreover, the through opening 310 is shaped in such a way as to allow, without hampering, the movement of the loader 5 between the receiving position and the loading position (also remember that the capsule 9 projects from the loader 5 through the insertion opening 501 even in this embodiment), and vice versa. That feature is clearly visible from above, as shown in Figure 12.

The operating cycle of the apparatus 1 according to the second embodiment is similar to what was described for the first embodiment, the difference being that the first member 21 (and consequently the loader 5) is manually moved by means of the lever 31.

Figures 16 to 25 show a third embodiment of the apparatus 1, according to this invention. It differs from the first embodiment (Figures 1 to 9) and from the second embodiment (Figures 10 to 15) in several aspects described in detail below.

First, according to this embodiment, the apparatus 1 comprises a recognition device which is coupled to the loader 5. That recognition device is configured to perform a recognition of the capsule 9 which is in the receiving seat 50.

In particular, the recognition device comprises an image acquisition device 6 and an electronic processing unit. The image acquisition device 6 is mounted on the loader 5 and is facing towards the receiving seat 50, in particular it is positioned at a side of the receiving seat 50. The image acquisition device 6 is configured to capture images of at least an identification portion of the capsule 9 which is in the receiving seat 50. For example the identification portion of the capsule 9 is placed at the top wall 91 of the capsule 9 and may be a graphical element.

The electronic processing unit is connected to the image acquisition device 6 to receive images of the identification portion of the capsule 9. The electronic processing unit is programmed to process those images in order to recognise the capsule 9 and consequently to enable or not enable beverage making and/or to set the dispensing parameters best suited to the beverage to be dispensed (such as for example the temperature and the pressure of the liquid substance to be fed).

The aspects closely linked to the capsule recognition device and to use of the information obtained are however known to a person skilled in the art and are not described in further detail.

The apparatus 1 according to the third embodiment also comprises a housing body 7 for housing the capsule 9 to be inserted into the loader 5. Basically, the user inserts the capsule 9 into the housing body 7, from which the capsule 9 is then loaded into the receiving seat 50 of the loader 5. The housing body 7 is placed upstream of the loader 5 along a capsule 9 insertion path, that is to say, the loader 5 is interposed between the housing body 7 and the infusion chamber 20.

The housing body 7 has a housing 70 for the capsule 9 and an unloading opening 702 through which the capsule 9 can be unloaded from the housing 70 towards the loader 5.

The housing body 7 also has a loading opening 701 through which the user inserts the capsule 9 into the housing 70.

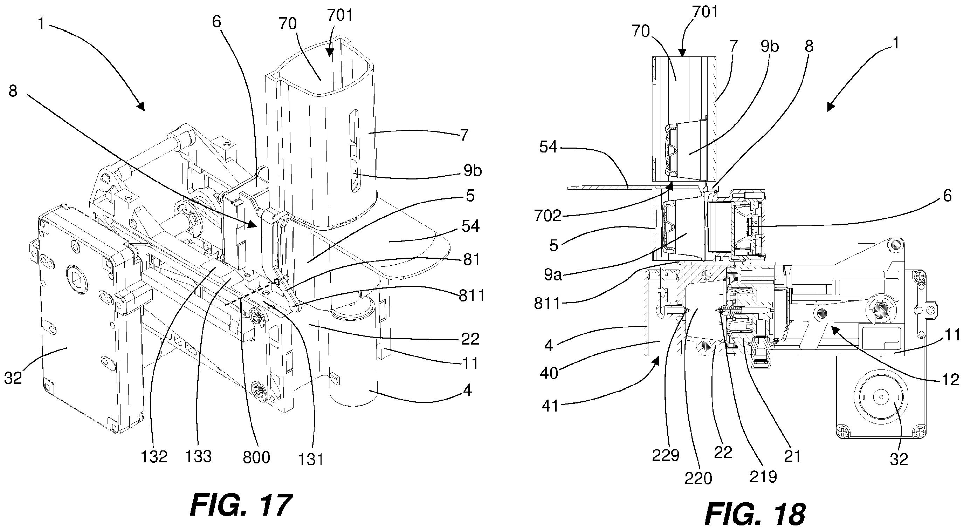

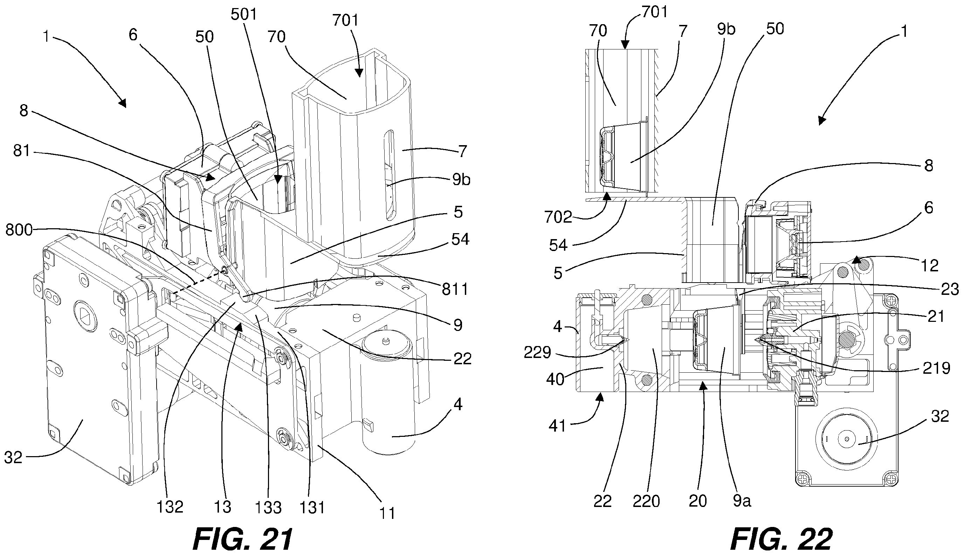

The housing body 7 is fixed and stationary relative to the supporting frame 11 and the loader 5 is movable relative to the housing body 7: in the receiving position the insertion opening 501 of the loader 5 is at the unloading opening 702 of the housing body 7, whilst in the loading position those openings are out of alignment relative to each other. When the loader 5 is in the receiving position (second position, Figures 17 and 18), the housing 70 is in communication with the receiving seat 50 of the loader 5 through the unloading opening 702 and the insertion opening 501, so that the capsule 9 housed in the housing body 7 is transferred into the receiving seat 50. When the loader 5 is in the loading position (first position, Figures 21 and 22), the unloading opening 702 is blocked and the capsule 9 housed in the housing body 7 cannot come out through the unloading opening 702 and remains in the housing 70.

In particular, in the loading position the unloading opening 702 is blocked by the loader 5 itself. For this purpose the loader 5 has a portion 54 which extends from an edge of the insertion opening 501 and which, in the loading position, blocks the unloading opening 702. As shown in particular in Figures 17 to 22, that portion 54 is a portion projecting cantilever-style from a main body of the loader 5 in which the receiving seat 50 is located. In particular, the portion 54 is made in one piece with the loader 5. The capsule 9 on the bottom of the housing 70 is resting on the portion 54.

The housing body 7 is useful because it allows the apparatus 1 to make two or more beverages one after the other automatically, using two or more capsules 9. That will be described in more detail below.

The housing body 7 is located in the front part of the apparatus 1, therefore it is near the user.

It should be noticed that the outer casing (not shown) of the apparatus 1 is shaped in such a way as to cover the receiving seat 50 when the loader 5 is in the loading position. Therefore, the user can only insert the capsule 9 into the housing body 7.

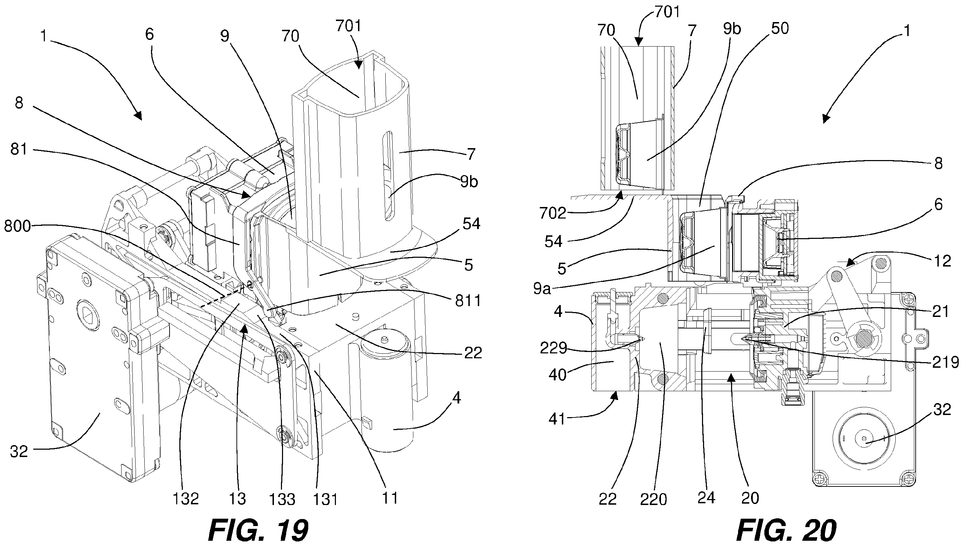

The apparatus 1 according to the third embodiment comprises an activating element 8 for activating the image acquisition device 6. The activating element 8 is mounted on the loader 5, at which it pivots around an axis of rotation 800. The activating element 8 tilts around the axis of rotation 800, between an inactive position (Figures 18 and 20, of which

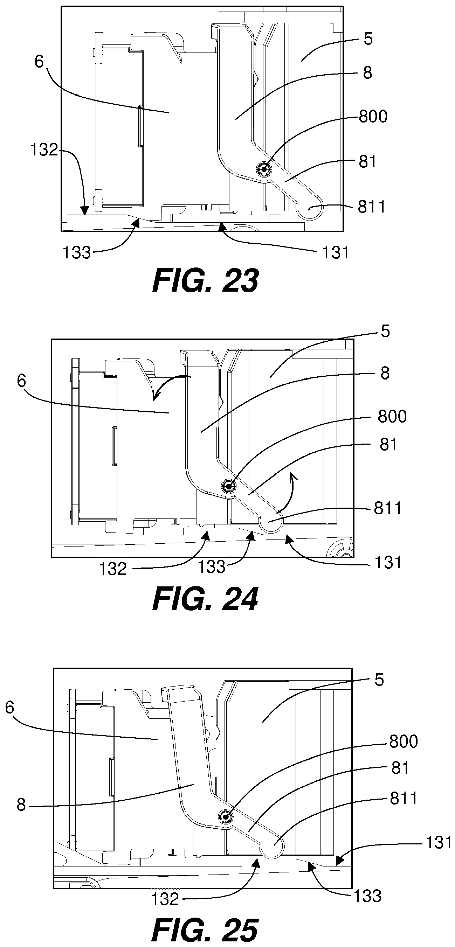

Figures 23 and 24 show respective details), in which the image acquisition device 6 is not operating, and an active position (Figure 22, of which Figure 25 shows a detail), in which the activating element 8 activates the image acquisition device 6. For this purpose the activating element 8 is mechanically or electrically connected to the image acquisition device 6 for transmitting a signal relative to the active position being reached.

The switching of the activating element 8 from the inactive position to the active position occurs as a result of the interaction between a rounded end 811 of a projecting arm 81 of the activating element 8 with a contact surface 13 of the supporting frame 11. The contact surface 13 has a first flat zone 131, a second flat zone 132 and an inclined zone 133 interposed between them. The first flat zone 131 is at a lower height than the second flat zone 132, therefore it is further from the axis of rotation 800.

A spring pushes the activating element 8 towards the inactive position. During the movement of the loader 5 from the receiving position to the loading position, the rounded end 811 interacts with an inclined plane constituted of the inclined zone 133; consequently the activating element 8 rotates around the axis of rotation 800 in an anticlockwise direction (that is to say, in the direction shown by the arrows in Figure 24) and goes to the active position, thereby activating the recognition device. Basically, when the rounded end 811 interacts with the first flat zone 131, the activating element 8 is in the inactive position; when the rounded end 811 interacts with the second flat zone 132, the activating element 8 is in the active position; when the rounded end 811 interacts with the inclined zone 133, the activating element 8 switches its configuration.

For further details about a tilting element for activating a recognition device, see for example what is described in patent application WO 2019/021076 A1, by the same Applicant.

An example of an operating cycle of the apparatus 1 according to the third embodiment is as follows:
- the first member 21 is in the operating position (with the infusion chamber 20 closed) and the loader 5 is in the receiving position; the user inserts a first capsule 9a into the housing body 7: the first capsule 9a falls into the receiving seat 50, where it remains because the outfeed opening 502 is blocked; the user inserts a second capsule 9b into the housing body 7, where it remains because it is stopped by the first capsule 9a below (Figures 17 and 18); the user issues a start beverage making command to the apparatus 1;
- the motor 32 drives the articulated mechanism 12, which moves the first member 21 from the operating position towards the home position along the horizontal line of movement 210; the loader 5, fixed to the first member 21, is moved from the receiving position towards the loading position (Figures 19 and 20); the first capsule 9a remains inside the receiving seat 50, the second capsule 9b remains in the housing 70 since the portion 54 of the loader 5 prevents it from coming out; during this movement, the activating element 8 goes to the active position and the image acquisition device 6 is activated;
- the first member 21 and the loader 5 respectively reach the home position (with the infusion chamber 20 open) and the loading position; the outfeed opening 502 is no longer blocked and the first capsule 9a, thanks to gravity, falls from the receiving seat 50 into the infusion chamber 20 below, thereby being loaded into the infusion chamber 20 (Figures 21 and 22);
- the first member 21 is moved from the home position towards the operating position, closing the infusion chamber 20 and returning the loader 5 towards the receiving position; during this movement, the activating element 8 returns to the inactive position;
- the infusion chamber 20 is closed with the first capsule 9a inside it; beverage making (based on the information obtained by the recognition device) and its dispensing by the dispenser 4 can start; in the meantime the second capsule 9b in the housing body 7 falls into the receiving seat 50;
- at the end of the dispensing, the first member 21 is moved from the operating position towards the home position, the first capsule 9a is unloaded from the infusion chamber 20 and, repeating the steps described above, the second capsule 9b is loaded into the infusion chamber 20 and the beverage is made and dispensed.

Basically, the presence of the housing body 7 allows a further capsule 9 (or multiple capsules 9, depending on the height of the housing body 7) to be received while a first capsule 9 is already loaded or is about to be loaded into the infusion chamber 20. The further capsule 9 is inserted into the housing 70, where it remains (for example, thanks to the portion 54 of the loader 5) until the loader 5 returns to the receiving position.

## Claims

1. An apparatus (1) for making a beverage by infusion of a food substance contained in a capsule (9), the apparatus (1) comprising:
- a supporting frame (11);
- an infusion unit (2) which defines an infusion chamber (20) intended to receive the capsule (9), the infusion unit (2) comprising a first member (21) and a second member (22), the first member (21) being movable relative to the second member (22) between a home position, in which the first member (21) and the second member (22) are spaced apart from each other and the infusion chamber (20) is open and allows loading of the capsule (9) into the infusion chamber (20) or removal of the capsule (9) from the infusion chamber (20), and an operating position, in which the first member (21) and the second member (22) are coupled to each other and the infusion chamber (20) is closed;
- beverage making parts which are configured to feed a liquid substance through the food substance contained in the capsule (9); and
- a loader (5) for loading the capsule (9) into the infusion chamber (20), the loader (5) having an insertion opening (501) for inserting the capsule (9) into the loader (5), a receiving seat (50) for receiving the inserted capsule (9) and an outfeed opening (502) through which the capsule (9) can come out of the receiving seat (50) towards the infusion chamber (20);
**characterised in that** the loader (5) is movable relative to the supporting frame (11) between a first position and a second position,
the movement of the loader (5) from the first position to the second position, and vice versa, being coordinated with the movement of the first member (21) from the home position to the operating position, and vice versa, in such a way that when the first member (21) is in the home position the loader (5) is in the first position and that when the first member (21) is in the operating position the loader (5) is in the second position, the first position being a loading position in which the receiving seat (50) is in communication with the open infusion chamber (20) through the outfeed opening (502), so that in use the capsule (9) in the receiving seat (50) comes out of the receiving seat (50) through the outfeed opening (502) and is loaded into the infusion chamber (20), the second position being a receiving position in which the outfeed opening (502) is blocked, so that in use the capsule (9), which is inserted in the loader (5) and is received in the receiving seat (50), cannot come out through the outfeed opening (502) and remains in the receiving seat (50).

2. The apparatus (1) according to claim 1, wherein the loader (5) is movable relative to the second member (22) and the outfeed opening (502) of the receiving seat (50) is blocked by the second member (22) when the loader (5) is in the second position.

3. The apparatus (1) according to claim 1 or 2, wherein the movement of the loader (5) from the first position to the second position, and vice versa, is a translating movement.

4. The apparatus (1) according to claim 3, wherein the first member (21) is slidably mounted relative to the supporting frame (11) along a line of movement (210) between the home position and the operating position, the translating movement of the loader (5) from the first position to the second position, and vice versa, being parallel to the line of movement (210).

5. The apparatus (1) according to claim 4, wherein the line of movement (210) of the first member (21) and the translating movement of the loader (5) are substantially horizontal.

6. The apparatus (1) according to any one of claims 1 to 5, wherein the loader (5) is coupled to the first member (21) and is movable relative to the supporting frame (11) together with the first member (21).

7. The apparatus (1) according to any one of claims 1 to 6, wherein, in the loading position, the receiving seat (50), the outfeed opening (52) and the open infusion chamber (20) are positioned one above the other, so that the capsule (9) is loaded into the infusion chamber (20) by falling from the receiving seat (50) due to gravity.

8. The apparatus (1) according to any one of claims 1 to 7, also comprising a recognition device which is coupled to the loader (5) and which is configured to perform a recognition of the capsule (9) which is in the receiving seat (50).

9. The apparatus (1) according to claim 8, wherein the recognition device comprises an image acquisition device (6) which is mounted on the loader (5) and is facing towards the receiving seat (50), the image acquisition device (6) being configured to capture images of at least an identification portion of the capsule (9) which is in the receiving seat (50).

10. The apparatus (1) according to any one of claims 1 to 9, also comprising a housing body (7) for housing a capsule (9) to be inserted into the loader (5), the loader (5) being interposed between the housing body (7) and the infusion chamber (20), the housing body (7) having a housing (70) for the capsule (9) and an unloading opening (702) through which the capsule (9) can be unloaded from the housing (70) towards the loader (5),
wherein the housing body (7) is fixed and stationary relative to the supporting frame (11) and the loader (5) is movable relative to the housing body (7) in such a way that, when the loader (5) is in the first position, the unloading opening (702) is blocked and the capsule (9) housed in the housing body (7) cannot come out through the unloading opening (702) and remains in the housing (70), and that, when the loader (5) is in the second position, the housing (70) is in communication with the receiving seat (50) of the loader (5) through the unloading opening (702) and the insertion opening (501), so that the capsule (9) housed in the housing body (7) is transferred into the receiving seat (50).

11. The apparatus (1) according to claim 10, wherein the loader (5) has a portion (54) which extends from an edge of the insertion opening (501) and which, in the first position, blocks the unloading opening (702) of the housing body (7).

## Patentansprüche

1. Eine Vorrichtung zur Zubereitung eines Getränks durch den Aufguss einer Lebensmittelsubstanz, die in einer Kapsel (9) enthalten ist, die Vorrichtung (1) beinhaltet dabei Folgendes:
- einen Trägerrahmen (11);
- eine Aufgusseinheit (2), die eine Aufgusskammer (20) definiert, die dazu dient, die Kapsel (9) entgegenzunehmen, die Aufgusseinheit (2) beinhaltet dabei ein erstes Bauteil (21) und ein zweites Bauteil (22), das erste Bauteil (21) ist dabei im Verhältnis zum zweiten Bauteil (22) zwischen einer Grundstellung, in der das erste Bauteil (21) und das zweite Bauteil (22) in einem Abstand voneinander sind und die Aufgusskammer (20) offen ist und das Laden der Kapsel (9) in die Aufgusskammer (20) oder das Entfernen der Kapsel (9) aus der Aufgusskammer (20) erlaubt, und einer Betriebsstellung, in der das erste Bauteil (21) und das zweite Bauteil (22) miteinander verbunden sind und die Aufgusskammer (20) geschlossen ist, beweglich;
- Getränkezubereitungsteile, die dazu beschaffen sind, um einen flüssigen Stoff durch die Lebensmittelsubstanz, die in der Kapsel (9) enthalten ist, hindurch zuzuführen; und
- eine Ladevorrichtung (5), um die Kapsel (9) in die Aufgusskammer (20) zu laden, die Ladevorrichtung (5) hat dabei eine Einsetzöffnung (501) zum Einsetzen der Kapsel (9) in die Ladevorrichtung (5), einen Aufnahmesitz (50), um die eingesetzte Kapsel (9) entgegenzunehmen, und eine Ausgabeöffnung (502), durch die die Kapsel (9) aus dem Aufnahmesitz (50) in Richtung Aufgusskammer (20) austreten kann;
**gekennzeichnet dadurch, dass** die Ladevorrichtung (5) im Verhältnis zum Trägerrahmen (11) zwischen einer ersten Stellung und einer zweiten Stellung beweglich ist;
die Bewegung der Ladevorrichtung (5) von der ersten Stellung in die zweite Stellung und umgekehrt ist dabei mit der Bewegung des ersten Bauteils (21) von der Grundstellung in die Betriebsstellung und umgekehrt koordiniert, solcherart, dass, wenn das erste Bauteil (21) in der Grundstellung ist, die Ladevorrichtung (5) in der ersten Stellung ist, und dass, wenn das erste Bauteil (21) in der Betriebsstellung ist, die Ladevorrichtung (5) in der zweiten Stellung ist, die erste Stellung ist dabei eine Ladestellung, in der der Aufnahmesitz (50) durch die Ausgabeöffnung (502) in Verbindung mit der offenen Aufgusskammer (20) steht, sodass im Gebrauch die Kapsel (9) im Aufnahmesitz (50) durch die Ausgabeöffnung (502) hindurch aus dem Aufnahmesitz (50) austritt und in die Aufgusskammer (20) geladen wird, die zweite Stellung ist dabei eine Empfangsstellung, in der die Ausgabeöffnung (502) gesperrt ist, sodass im Gebrauch die Kapsel (9), die in die Ladevorrichtung (5) eingesetzt ist und im Aufnahmesitz (50) entgegengenommen wird, nicht aus der Ausgabeöffnung (502) austreten kann und im Aufnahmesitz (50) bleibt.

2. Die Vorrichtung (1) nach dem Patentanspruch 1, wobei die Ladevorrichtung (5) im Verhältnis zum zweiten Bauteil (22) beweglich ist und die Ausgabeöffnung (502) des Aufnahmesitzes (50) durch das zweite Bauteil (22) gesperrt ist, wenn die Ladevorrichtung (5) in der zweiten Stellung ist.

3. Die Vorrichtung (1) nach dem Patentanspruch 1 oder 2, wobei die Bewegung der Ladevorrichtung (5) von der ersten Stellung in die zweite Stellung und umgekehrt eine Schiebebewegung ist.

4. Die Vorrichtung (1) nach dem Patentanspruch 3, wobei das erste Bauteil (21) im Verhältnis zum Trägerrahmen (11) verschiebbar auf einer Bewegungslinie (210) zwischen der Grundstellung und der Betriebsstellung montiert ist, die Schiebebewegung der Ladevorrichtung (5) von der ersten Stellung in die zweite Stellung und umgekehrt verläuft dabei parallel zur Bewegungslinie (210).

5. Die Vorrichtung (1) nach dem Patentanspruch 4, wobei die Bewegungslinie (210) des ersten Bauteils (21) und die Schiebebewegung der Ladevorrichtung (5) im Wesentlichen horizontal sind.

6. Die Vorrichtung (1) nach jedem der Patentansprüche 1 bis 5, wobei die Ladevorrichtung (5) mit dem ersten Bauteil (21) verbunden ist und im Verhältnis zum Trägerrahmen (11) zusammen mit dem ersten Bauteil (21) beweglich ist.

7. Die Vorrichtung (1) nach jedem der Patentansprüche 1 bis 6, wobei in der Ladestellung der Aufnahmesitz (50), die Ausgabeöffnung (52) und die offene Aufgusskammer (20) übereinander platziert sind, sodass die Kapsel (9) in die Aufgusskammer (20) geladen wird, indem sie aufgrund der Schwerkraft aus dem Aufnahmesitz (50) fällt.

8. Die Vorrichtung (1) nach jedem der Patentansprüche 1 bis 7, auch eine Erkennungsvorrichtung beinhaltend, die mit der Ladevorrichtung (5) gekoppelt ist und die dazu ausgerichtet ist, eine Erkennung der Kapsel (9), die im Aufnahmesitz (50) ist, durchzuführen.

9. Die Vorrichtung (1) nach dem Patentanspruch 8, wobei die Erkennungsvorrichtung eine Bildaufnahmevorrichtung (6) beinhaltet, die an der Ladevorrichtung (5) montiert ist und zum Aufnahmesitz (50) gerichtet ist, die Bildaufnahmevorrichtung (6) ist dabei dazu ausgerichtet, Bilder mindestens eines Kennabschnitts der Kapsel (9), die im Aufnahmesitz (50) ist, aufzunehmen.

10. Die Vorrichtung (1) nach jedem der Patentansprüche 1 bis 9, auch einen Gehäusekörper (7) zur Unterbringung einer Kapsel (9), die in die Ladevorrichtung (5) einzusetzen ist, beinhaltend, die Ladevorrichtung (5) befindet sich dabei zwischen dem Gehäusekörper (7) und der Aufgusskammer (20), der Gehäusekörper (7) hat dabei ein Gehäuse (70) für die Kapsel (9) und eine Entladeöffnung (702), durch die die Kapsel (9) vom Gehäuse (70) in Richtung der Ladevorrichtung (5) entladen werden kann,
wobei der Gehäusekörper (7) feststehend und stationär im Verhältnis zum Trägerrahmen (11) ist und die Ladevorrichtung (5) beweglich im Verhältnis zum Gehäusekörper (7) ist, solcherart, dass, wenn die Ladevorrichtung (5) in der ersten Stellung ist, die Entladeöffnung (702) gesperrt ist und die Kapsel (9), die im Gehäusekörper (7) untergebracht ist, nicht durch die Entladeöffnung (702) austreten kann und im Gehäuse (70) bleibt, und dass, wenn die Ladevorrichtung (5) in der zweiten Stellung ist, das Gehäuse (70) durch die Entladeöffnung (702) und die Einsetzöffnung (501) in Verbindung mit dem Aufnahmesitz (50) der Ladevorrichtung (5) steht, sodass die Kapsel (9), die im Gehäusekörper (7) untergebracht ist, in den Aufnahmesitz (50) übertragen wird.

11. Die Vorrichtung (1) nach dem Patentanspruch 10, wobei die Ladevorrichtung (5) einen Abschnitt (54) hat, der über eine Kante der Einsetzöffnung (501) herausragt und der, in der ersten Stellung, die Entladeöffnung (702) des Gehäusekörpers (7) sperrt.

## Revendications

1. Un appareil (1) pour la préparation d'une boisson par infusion d'une substance alimentaire contenue dans une capsule (9), l'appareil (1) comprenant :
- un châssis de support (11) ;
- un groupe d'infusion (2) qui définit une chambre d'infusion (20) destinée à recevoir la capsule (9), le groupe d'infusion (2) comprenant un premier organe (21) et un deuxième organe (22), le premier organe (21) étant mobile par rapport au deuxième organe (22) entre une position de repos, dans laquelle le premier organe (21) et le deuxième organe (22) sont espacés l'un de l'autre et la chambre d'infusion (20) est ouverte et permet le chargement de la capsule (9) dans la chambre d'infusion (20) ou le retrait de la capsule (9) de la chambre d'infusion (20), et une position opérationnelle, dans laquelle le premier organe (21) et le deuxième organe (22) sont accouplées l'un avec l'autre et la chambre d'infusion (20) est fermée ;
- des éléments de préparation de la boisson qui sont configurés pour alimenter une substance liquide à travers la substance alimentaire contenue dans la capsule (9) ; et
- un chargeur (5) pour charger la capsule (9) dans la chambre d'infusion (20), le chargeur (5) ayant une ouverture d'introduction (501) pour introduire la capsule (9) dans le chargeur (5), un siège de réception (50) pour recevoir la capsule (9) introduite et une ouverture de sortie (502) à travers laquelle la capsule (9) peut sortir du siège de réception (50) vers la chambre d'infusion (20) ;
**caractérisé en ce que** le chargeur (5) est mobile par rapport au châssis de support (11) entre une première position et une deuxième position,
le mouvement du chargeur (5) de la première position à la deuxième position, et inversement, étant coordonné avec le mouvement du premier organe (21) de la position de repos à la position opérationnelle, et inversement, de manière à ce que, lorsque le premier organe (21) est dans la position de repos, le chargeur (5) soit dans la première position et, lorsque le premier organe (21) est dans la position opérationnelle, le chargeur (5) soit dans la deuxième position, la première position étant une position de chargement dans laquelle le siège de réception (50) est en communication avec la chambre d'infusion (20) ouverte à travers l'ouverture de sortie (502), de sorte qu'en utilisation la capsule (9) dans le siège de réception (50) sort du siège de réception (50) à travers l'ouverture de sortie (502) et est chargée dans la chambre d'infusion (20), la deuxième position étant une position de réception dans laquelle l'ouverture de sortie (502) est bloquée, de sorte qu'en utilisation la capsule (9), qui est introduite dans le chargeur (5) et est reçue dans le siège de réception (50), ne peut pas sortir à travers l'ouverture de sortie (502) et reste dans le siège de réception (50).

2. L'appareil (1) selon la revendication 1, dans lequel le chargeur (5) est mobile par rapport au deuxième organe (22) et l'ouverture de sortie (502) du siège de réception (50) est bloquée par le deuxième organe (22) lorsque le chargeur (5) est dans la deuxième position.

3. L'appareil (1) selon la revendication 1 ou 2, dans lequel le mouvement du chargeur (5) de la première position à la deuxième position, et inversement, est un mouvement de translation.

4. L'appareil (1) selon la revendication 3, dans lequel le premier organe (21) est monté de façon coulissante par rapport au châssis de support (11) le long d'une direction de mouvement (210) entre la position de repos et la position opérationnelle, le mouvement de translation du chargeur (5) de la première position à la deuxième position, et inversement, étant parallèle à la direction de mouvement (210).

5. L'appareil (1) selon la revendication 4, dans lequel la direction de mouvement (210) du premier organe (21) et le mouvement de translation du chargeur (5) sont essentiellement horizontaux.

6. L'appareil (1) selon l'une quelconque des revendications de 1 à 5, dans lequel le chargeur (5) est accouplé au premier organe (21) et est mobile par rapport au châssis de support (11) avec le premier organe (21).

7. L'appareil (1) selon l'une quelconque des revendications de 1 à 6, dans lequel, dans la position de chargement, le siège de réception (50), l'ouverture de sortie (52) et la chambre d'infusion (20) ouverte sont positionnés les uns au-dessus des autres, de sorte que la capsule (9) est chargée dans la chambre d'infusion (20) en tombant du siège de réception (50) par gravité.

8. L'appareil (1) selon l'une quelconque des revendications de 1 à 7, comprenant également un dispositif de reconnaissance qui est accouplé au chargeur (5) et qui est configuré pour effectuer une reconnaissance de la capsule (9) qui est dans le siège de réception (50).

9. L'appareil (1) selon la revendication 8, dans lequel le dispositif de reconnaissance comprend un dispositif d'acquisition d'images (6) qui est monté sur le chargeur (5) et est orienté vers le siège de réception (50), le dispositif d'acquisition d'images (6) étant configuré pour capturer des images d'au moins une portion d'identification de la capsule (9) qui est dans le siège de réception (50).

10. L'appareil (1) selon l'une quelconque des revendications de 1 à 9, comprenant également un corps de logement (7) pour loger une capsule (9) à introduire dans le chargeur (5), le chargeur (5) étant interposé entre le corps de logement (7) et la chambre d'infusion (20), le corps de logement (7) ayant un logement (70) pour la capsule (9) et une ouverture de déchargement (702) à travers laquelle la capsule (9) peut être déchargée du logement (70) vers le chargeur loader (5),
dans lequel le corps de logement (7) est fixe et stationnaire par rapport au châssis de support (11) et le chargeur (5) est mobile par rapport au corps de logement (7) de sorte que, lorsque le chargeur (5) est dans la première position, l'ouverture de déchargement (702) est bloquée et la capsule (9) logée dans le corps de logement (7) ne peut pas sortir de l'ouverture de déchargement (702) et reste dans le logement (70), et que, lorsque le chargeur (5) est dans la deuxième position, le logement (70) est en communication avec le siège de réception (50) du chargeur (5) à travers l'ouverture de déchargement (702) et l'ouverture d'introduction (501), de sorte que la capsule (9) logée dans le corps de logement (7) est transférée dans le siège de réception (50).

11. L'appareil (1) selon la revendication 10, dans lequel le chargeur (5) a une portion (54) qui s'étend à partir d'un bord de l'ouverture d'introduction (501) et qui, dans la première position, bloque l'ouverture de déchargement (702) du corps de logement (7).
